# EUROPÄISCHE PATENTSCHRIFT

(11) **EP 1 164 302 B1**
(45) Veröffentlichungstag und Bekanntmachung des Hinweises auf die Patenterteilung: **05.07.2006**
(21) Anmeldenummer: 01111094.7
(22) Anmeldetag: 09.05.2001
(51) Int. Cl.: F16C 33/10, F16C 17/04, F16C 33/14, F16C 17/14, F04D 29/04

(54) **Axailgleitlager für eine Nasslaufkreiselpumpe**
Sliding thrust bearing for a wet running rotary pump
Palier axial à glissement pour une pompe centrifuge à rotor mouillé

(30) Priorität: 16.06.2000 DE 10028951
(43) Veröffentlichungstag der Anmeldung: 19.12.2001
(73) Patentinhaber: GRUNDFOS A/S, DK-8850 Bjerringbro (DK)
(72) Erfinder: Holst, Jesper Nielsen, 8660 Skanderborg (DK); Grann, Helge, 8850 Bjerringbro (DK)
(74) Vertreter: Vollmann, Heiko

(56) Entgegenhaltungen:
- EP-A- 0 962 674
- DE-A- 2 834 315
- DE-A- 19 544 173
- DE-C- 939 667
- US-A- 3 413 048
- US-A- 4 806 080
- US-A- 5 264 748
- PATENT ABSTRACTS OF JAPAN Bd. 1995, Nr. 01, 28. Februar 1995 (1995-02-28) & JP 6 300044 A (SANKYO SEIKI MFG CO LTD), 25. Oktober 1994 (1994-10-25)

## Beschreibung

Die Erfindung betrifft ein Axialgleitlager für eine Nasslaufkreiselpumpe mit den im Oberbegriff des Anspruchs 1 angegebenen Merkmalen. Ein derartiges Axialgleitlager ist aus dem Dokument US 4 806 080 A bekannt.

Axialgleitlager dieser Art werden in Kreiselpumpen eingesetzt, um die vom Laufrad der Pumpe sich im Betrieb einstellenden Axialkräfte aufzunehmen. Der Schmierfilm wird durch das bei Nasslaufpumpen im Spaltrohrtopf befindliche Fördermedium gebildet. Andere bekannte Lager dieser Art bestehen aus einem harten, abriebfesten und einem weichen, die Schmierung unterstützenden Werkstoff. Als harter Werkstoff werden beispielsweise Keramik und als weicher Werkstoff gesinterte Kohle eingesetzt. Um einen möglichst dünnen Schmierfilm zu erreichen, wird die Oberfläche des zum harten Lagerring weisenden Lagerrings regelmäßig oberflächenbearbeitet, beispielsweise durch Läppen. Derartige Bearbeitungen sind insbesondere bei Großserienprodukten wie den in Rede stehenden Nasslaufkreiselpumpen aufwändig und teuer, da ein gesonderter spanabhebender Bearbeitungsgang vorzusehen ist.

Wie auch in den VDI-Richtlinien 2204 angegeben, unterscheidet man bei den Axiallagerbauarten solche mit eingearbeiteten Keil- und Rastflächen sowie solche mit kippbeweglichen Gleitschuhen. Solche Lager werden in ölgeschmierten Maschinen größerer Leistung eingesetzt. Bei den Lagern mit eingearbeiteter Keil- und Rastfläche unterscheidet man nach Spaltformen, nämlich den Keilspalt und den Stufenspalt. Eine Zwischenform ist der Keilspalt mit Rastfläche. All diese Lagerarten werden bei Nasslaufkreiselpumpen, wie sie als Großserienprodukte beispielsweise als Heizungs- oder Brauchwasserumwälzpumpen hergestellt werden, üblicherweise nicht eingesetzt, da sie zu kostenintensiv in der Herstellung sind. Die Anforderungen an die Herstellungsgenauigkeit sind hier extrem hoch, da als Schmierstoff regelmäßig das Fördermedium Wasser eingesetzt wird, das im Vergleich zu den üblicherweise verwendeten Ölen sehr niedrig viskos ist. Bei solchen Nasslaufkreiselpumpen kleiner und mittlerer Leistung werden üblicherweise gegeneinander laufende planflächige Ringe eingesetzt, deren Oberfläche geläppt ist.

Allen Bauarten gemeinsam ist, dass zwar einerseits eine möglichst gute Schmierung gewährleistet sein soll, andererseits jedoch sich ein möglichst dünner Schmierfilm ohne die Gefahr eines Schmierfilmabrisses einstellen soll. Hierzu ist es regelmäßig erforderlich, die tragenden Flächen, also insbesondere die Rastflächen, die im Betrieb die tragenden Flächen bilden, sehr exakt zu bearbeiten. Es ist üblich, diese Flächen zu läppen.

Vor diesem Stand der Technik liegt der Erfindung die Aufgabe zugrunde, ein gattungsgemäßes Axialgleitlager für eine Nasslaufkreiselpumpe so weiterzubilden, dass einerseits die Herstellung des Pumpenaggregats verbilligt und andererseits die Laufeigenschaften verbessert oder zumindest von vergleichbarer Güte sind.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Grundgedanke der vorliegenden Erfindung ist es, bereits während des formgebenden Vorgangs, also beispielsweise beim Spritzgießen oder Pressen oder auch bei einer ohnehin erforderlichen thermischen Nachbehandlung Unebenheiten auf der Lauffläche zu erzeugen, die so gestaltet sind, dass im Bereich von Erhöhungen tragende Flächen und in den Bereichen dazwischen nichttragende Flächen gebildet sind, welche das Schmiermittel zu den tragenden Flächen hinführen. Diese bewusst erzeugten Unebenheiten sind in Größenordnungen, welche die sonst üblichen, beispielsweise durch Läppen beseitigten Oberflächenrauigkeiten, deutlich übersteigen. Diese Unebenheiten liegen vorzugsweise in einem Bereich zwischen 10 µm und 50 µm, d. h. dies ist die Höhendifferenz zwischen den tiefsten und höchsten Punkten der Lauffläche des Lagerrings.

Ein derart gestalteter erster Lagerring wird erfindungsgemäß auf Kohlenstoffbasis aufgebaut, wobei der zweite Lagerring ein keramischer ist. Der erste Lagerring kann beispielsweise aus gesinterter Kunstkohle bestehen. Derartige, beispielsweise mit Antimon oder Kunststoff imprägnierte Sinterwerkstoffe auf Kohlenstoffbasis, sind bekannt. Auch auf Kohlenstoff basierende Spritzgusswerkstoffe können Verwendung finden, wobei hier vorzugsweise Duroplaste, z. B. Phenolharze mit 30 % bis 70 % Kohlenstoff bzw. Graphitgehalt eingesetzt werden können. Solche duroplastischen Kunstharze können in einer thermischen Nachbehandlung in ihren Laufeigenschaften verbessert werden.

Sowohl beim Einsatz von gesintertem Material auf Kohlenstoffbasis als auch von Spritzgussmaterial auf Köhlenstoffbasis mit ggf. nachfolgender thermischer Behandlung können die vorerwähnten Unebenheiten gezielt im formgebenden Prozess bzw. in der thermischen Nachbehandlung erzeugt werden, so dass die Lauffläche ohne die sonst bei Lagerflächen übliche spanabhebende oder andere Nachbearbeitung eingesetzt werden kann, was fertigungstechnisch erhebliche Vorteile mit sich bringt.

Bevorzugt sind die Unebenheiten in Wellenform gestaltet, so dass sich die Erhöhungen, also die tragenden Flächen, möglichst gleichmäßig über den gesamten Kreisring verteilen. Die Anordnung der Wellen erfolgt zweckmäßigerweise so, dass die Wellenberge und Wellentäler radial vom Kreismittelpunkt des Lagerrings ausgerichtet sind. Vorzugsweise sind zwischen drei und sechs Wellenberge verteilt über die Oberfläche angeordnet. Dies gilt für kleine und mittlere Lagergrößen. Mit zunehmender radialer Lagergröße wird auch die Anzahl der Wellenberge steigen.

Zweckmäßigerweise sind im Bereich der Wellentäler zusätzliche Schmiernuten vorgesehen, welche die Schmierstoffzufuhr, insbesondere einen intensiven Austausch des Schmiermittels bewirken. Die Wellentäler ersetzen also nicht die Schmierstoffnuten, sondern führen lediglich den Schmierstoff zu den Laufflächen und tragen damit zur Druckbildung des Schmierfilms bei.

Während bei vergleichbaren Axiallagerformen nach dem Stand der Technik, z. B. Keilspalt mit Rastfläche oder Stufenspalt, die Rastfläche bzw. der obere Teil der Stufe durch Läppen abschließend fein bearbeitet wird, um die spätere Lauffläche zu bilden und die sich einstellende Schmierfilmdicke zu definieren, sieht die Erfindung vor, dass sich die Wellenberge während eines Einlaufvorgangs des Lagers abflachen, so, dass sich im Betrieb ein möglichst dünner Schmierfilm zwischen den abgeflachten Wellenbergen und dem gegenüberliegenden Lagerring einstellt. Ein solches gezieltes Abflachen ersetzt einerseits die vorherige Feinbearbeitung und hat andererseits den Vorteil, dass sich mit zunehmendem Abtrag die tragende Fläche des Lagers in gezielter Form vergrößert, so dass dann, wenn diese tragende Fläche eine gewisse Mindestgröße erreicht hat, sich ein dünner Schmierfilm bildet, der einen weiteren Abtrag verhindert. Hierdurch stellt sich der Schmierfilm praktisch selbsttätig ein, wodurch sehr dünne Schmierfilmdicken von typischerweise unter 1 µm erreicht werden können, die bei spanender Bearbeitung des Lagerrings nicht oder nur mit sehr viel Aufwand eingestellt werden können. Der Einlaufvorgang des erfindungsgemäßen Lagers kann beispielsweise zwischen 5 und 60 min. dauern, wobei sich die tragende Fläche des ersten Lagerrings von ursprünglich beispielsweise 5 % bis 10 % auf bis zu 50 % der Gesamtfläche vergrößert.

Die Lauffläche des ersten Lagerrings ist zweckmäßigerweise so gestaltet, dass mit zunehmender Abflachung der Erhöhungen die tragende Fläche ebenfalls zunimmt. In welchem Maße diese Zunahme erfolgt, kann durch Wahl des Anstiegswinkels zwischen Wellental und Wellenberg sowie Verlauf des Anstiegwinkels gezielt beeinflusst werden. So kann beispielsweise ein lineares, progressives oder auch degressives Anstiegsverhalten durch entsprechende Formgebung eingestellt werden.

Entscheidend ist, dass dieser Einlaufvorgang nur im Bereich der Erhöhungen und nicht der gesamten Lagerfläche erfolgt. Würde man nämlich bei einem planflächigen Lagerring, wie es zum Stand der Technik zählt, auf den Läppvorgang verzichten, um die Anpassung durch Einlaufen zu erzeugen, dann wäre die Reibleistung so groß, dass die Pumpe ihre Leistungsvorgabe nicht mehr erfüllen könnte. Der Grund liegt in einem zu schnellen Zuwachs der tragenden Flächen. Dies wird bei der erfindungsgemäßen Ausgestaltung des Lagerrings hingegen vermieden.

Die Erfindung ist nachfolgend anhand eines in der Zeichnung dargestellten Ausführungsbeispiels näher erläutert. Es zeigen:
- Fig. 1: in schematischer Darstellung eine perspektivische Ansicht auf den ersten Lagerring,
- Fig. 2: eine Seitenansicht des ersten Lagerrings,
- Fig. 3: eine Draufsicht auf die Lauffläche des ersten Lagerrings, und zwar
- Fig. 3a: vor dem Einlaufen,
- Fig. 3b: während des Einlaufens und
- Fig. 3c: nach dem Einlaufen und
- Fig. 4: ein Messdiagramm, welches die sich beim Betrieb des erfindungsgemäßen Lagers über die Zeit einstellenden Reibkräfte im Vergleich zu denen eines Lagers nach dem Stand der Technik darstellt.

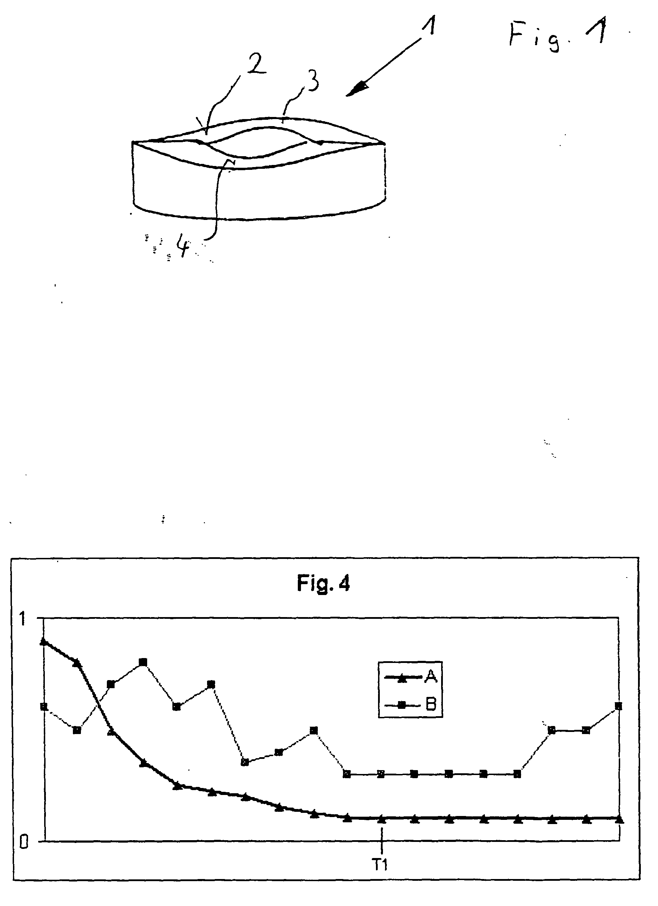

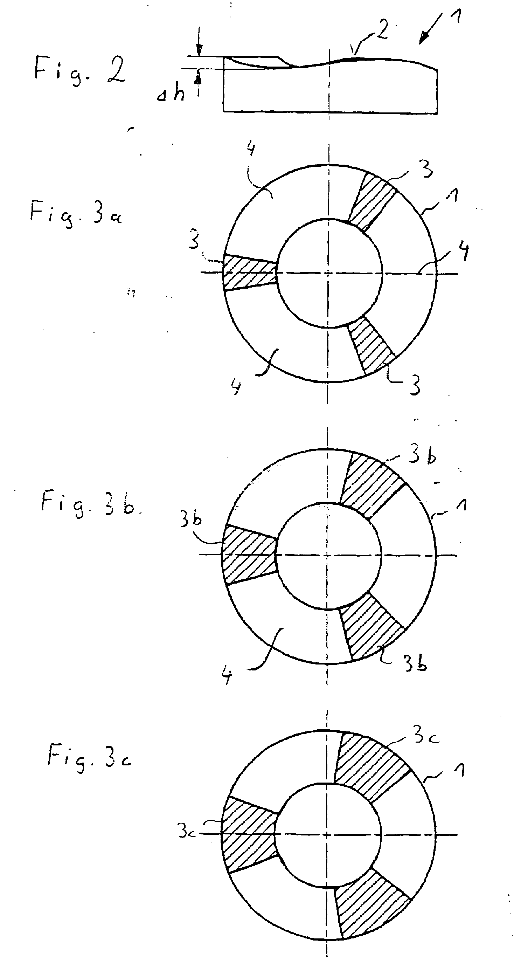

Der anhand der Fig. 1 bis 3 dargestellte Lagerring 1 ist Teil eines Axiallagers einer Nasslaufkreiselpumpe, wie sie beispielhaft in DE 195 44 173 A1 in den Fig. 2 oder 3 dargestellt ist. Eine derartige Axiallagerausbildung zählt zum Stand der Technik und wird daher hier nicht im Einzelnen beschrieben. Das Axiallager selbst besteht aus dem ringförmigen ersten Lagerring 1, der aus einem Werkstoff auf Kohlenstoffbasis besteht und einem zweiten Lagerring aus Keramik. Der keramische Lagerring dient gleichzeitig als Radiallagerfür die Welle und ist gehäusefest angeordnet, wohingegen der erste Lagerring 1 mit der Welle mitdreht. Diese Anordnung kann jedoch auch umgekehrt sein, je nach Werkstoffpaarung.

Während der hier nicht dargestellte zweite Lagerring, der ebenso wie der erste Lagerring 1 eine im Wesentlichen hohlzylindrische, also Ringform, aufweist, eine möglichst ebene Lauffläche hat, weist der Lagerring 1 eine Lauffläche 2 auf, die wellig ausgebildet ist. Im vorliegenden Ausführungsbeispiel sind insgesamt drei Wellenberge 3 als Erhöhungen sowie dazwischen angeordnete Wellentäler 4 vorgesehen und gleichmäßig, d. h. um 120° verteilt, mit radialer Ausrichtung angeordnet, so wie es insbesondere in der Darstellung nach Fig. 3a erkennbar ist. Die Wellenberge 3 weisen, wie anhand der Fig. 3a dargestellt ist, eine leichte Abflachung auf. Der Höhenunterschied Δh zwischen einem Wellenberg 3 und einem Wellental 4 beträgt im dargestellten Ausführungsbeispiel 40 µm.

Der anhand der Fig. 1, 2 und 3a dargestellte erste Lagerring 1 ist in dieser Form ausschließlich durch ein formgebendes Verfahren, wie z. B. Spritzgießen oder Sintern, hergestellt. Eine materialabtragende Bearbeitung nach der Formgebung ist nicht erfolgt. Dies erfolgt durch die Einlaufphase des Lagers, die Teil des normalen, bestimmungsgemäßen Betriebs der Pumpe ist.

Wenn also das Pumpenaggregat erstmals in Betrieb genommen wird, hat der erste Lagerring 1 die in Fig. 3a dargestellte Form mit Wellenbergen 3 und Wellentälern 4 auf seiner Lauffläche 2. Der gegenüberliegend angeordnete zweite Lagerring hat eine ebene Lauffläche. Als Schmiermittel dient das Fördermedium, in der Regel Wasser, wobei davon auszugehen ist, dass bei Erstinbetriebnahme zunächst einmal keine Schmierung vorhanden ist, bis das Spaltrohr mit Förderflüssigkeit gefüllt ist.

Mit Anlauf der Pumpe ergibt sich zunächst aufgrund der Oberflächenrauigkeit der Wellenberge 3 und der vergleichsweise kleinen Tragflächen, diese sind durch die in Fig. 3 schraffiert dargestellten Flächen der Wellenberge 3 gebildet, eine erhöhte Reibung, wodurch der erste Lagerring 1 im Bereich der Wellenberge 3 höhenmäßig abgetragen wird. Mit zunehmendem Abtrag der Wellenberge 3 vergrößert sich die Tragfläche des Lagers, da die Wellenberge im Querschnitt zu den Tälern hin breiter werden. Dies ist in Fig. 3b deutlich sichtbar, wo die dort mit 3b gekennzeichneten Wellenberge schon eine deutlich größere Fläche als die gemäß Fig. 3a haben. Am Ende des Einlaufvorgangs haben die Wellenberge die anhand von Fig. 3c ersichtliche breite Form. Diese dort mit 3c bezeichneten Wellenberge bilden die Tragfläche des eingelaufenen Lagers und umfassen im vorliegenden Ausführungsbeispiel etwa 40% der Lauffläche 2.

Das Einlaufen des Lagers erfolgt so lange, bis sich ein durchgehender Schmierfilm zwischen den Wellenbergen 3 und dem zweiten Lagerring gebildet hat. Dies ist bei einer Kreiselpumpe beispielsweise nach etwa 30 min. erreicht. Dieses selbsttätige Einlaufen hat den erheblichen Vorteil, dass der gewünschte abrasive Verschleiß im Bereich der Wellenberge genau dann aufhört, wenn gerade ein durchgehender Schmierfilm gebildet ist. Dies ist gleichzeitig der optimale Betriebspunkt des Lagers.

In Fig. 4 ist ein solcher Einlaufvorgang des vorbeschriebenen Lagers dargestellt, und zwar im Vergleich zu einem Lager nach dem Stand der Technik, das eine ebene, geläppte Lauffläche aufweist. Die letzteres Lager betreffende Kurve ist an ihren Wendepunkten mit Quadraten gezeichnet und in Fig. 4 mit B bezeichnet, die des vorbeschriebenen Lagers hingegen mit A. Wie diese Kurve A verdeutlicht, weist das vorbeschriebene Lager zwar beim ersten Anlaufen eine deutlich höhere Reibung als das Lager nach dem Stand der Technik gemäß Kurve B auf, doch sinkt diese Reibung nach vergleichsweise kurzer Zeit auf einen Wert ab, der deutlich unter dem der Kurve B liegt. Ein weiterer erheblicher Vorteil ist darin zu sehen, dass in eingelaufenem Zustand - dieser Zustand ist in Fig. 4 mit T₁ bezeichnet - die Reibkräfte bei dem Lager gemäß der Erfindung nicht nur niedriger als bei dem nach dem Stand der Technik sind, sondern auch gleichmäßiger verlaufen. Bei dem Lager nach dem Stand der Technik ist ein sogenannter Slip-Stick-Effekt zu beobachten, d. h. ein ständiges Ansteigen und Abfallen der Reibkräfte, wie dies beispielsweise auch beim Übergang von Haftreibung in Gleitreibung zu beobachten ist. Es wird also deutlich, dass das erfindungsgemäße Lager, wenn es eingelaufen ist, was regelmäßig innerhalb der ersten Betriebsstunde der Fall sein wird, eine geringere Reibung als ein aus vergleichbarem Werkstoff hergestelltes Lager nach dem Stand der Technik aufweist, das durch Läppen nachbearbeitet ist, und dass es darüber hinaus wesentlich gleichmäßiger, d. h. schwingungsfreier läuft, da ein solcher Slip-Stick-Effekt nicht oder nur in sehr vermindertem Maße auftritt.

Die Verformung der Lauffläche 2 in Wellenberge 3 und Wellentäler 4 kann durch die Form des Spritzguss- bzw. Sinterwerkzeug vorgegeben sein. Es ist jedoch auch möglich, diese gezielten Unebenheiten in der Lauffläche durch eine thermische Nachbearbeitung oder durch Induzieren von Eigenspannungen zu erzeugen. Die Unebenheiten können auch durch unregelmäßig verteilt angeordnete Berge oder andere Erhebungen gebildet sein.

Es können im Bereich der Wellentäler 4 zusätzlich radiale Schmiernuten vorgesehen sein, welche eine intensivere Flutung des Lagers und einen guten Flüssigkeitsaustausch gewährleisten. Derartige Lagernuten sind an sich bekannt und werden deshalb hier auch nicht im Einzelnen beschrieben.

## Patentansprüche

1. Axialgleitlager für eine Nosslaufkreiselpumpe mit einem ersten Lagerring (1) und mit einem zweiten Lagerring aus Keramik, bei dem der erste Lagerring (1) in der zum zweiten Lagerring gerichteten Lauffläche (2) Unebenheiten (3, 4) aufweist, die so gestaltet sind, dass im Bereich von Erhöhungen (3) tragende Flächen und dazwischen nicht tragende Flächen gebildet sind, **dadurch gekennzeichnet, dass** der erste Lagerring (1) aus einem Spritzguss- oder Sinterwerkstoff auf Kohlenstoffbasis gebildet ist und dass die Unebenheiten (3, 4) in der Lauffläche (2) beim Spritzgießen, Pressen oder einer thermischen Nachbehandlung dieses Lagemings (1) gebildet worden sind.

2. Axialgleitlager nach Anspruch 1, **dadurch gekennzeichnet, dass** die Lauffläche (2) ohne materialabhebende Bearbeitung gebildet ist.

3. Axialgleitlager nach einem der vorhergehenden Ansprüche, **dadurch gekennzeichnet, dass** die Unebenheiten (3, 4) in Form einer welligen Oberfläche ausgebildet sind, die vorzugsweise eine Höhendifferenz Δh zwischen 10 µm bis 50 µm aufweisen.

4. Axialgleitlager nach einem der vorhergehenden Ansprüche, **dadurch gekennzeichnet, dass** drei bis sechs Wellenberge (3) verteilt über die Oberfläche (2) angeordnet sind.

5. Axialgleitlager nach einem der vorhergehenden Ansprüche, **dadurch gekennzeichnet, dass** in der zum zweiten Lagerring gerichteten Lauffläche (2) im Wesentlichen radial angeordnete Schmiernuten vorgesehen sind, die vorzugsweise im Bereich der Wellentäler (4) liegen.

6. Axialgleitlager nach einem der vorhergehenden Ansprüche, **dadurch gekennzeichnet, dass** sich die Wellenberge (3) während eines Einlaufvorgangs des Lagers abflachen, derart, dass sich im Betrieb ein möglichst dünner Schmierfilm zwischen den abgeflachten Wellenbergen (3) und dem gegenüberliegenden Lagerring bildet.

7. Axialgleitlager nach einem der vorhergehenden Ansprüche, **dadurch gekennzeichnet, dass** die Unebenheiten (3, 4) in der Lauffläche (2) des ersten Lagerrings (1) so gestaltet sind, dass mit zunehmender Abflachung der Erhöhungen beim Einlaufen des Lagers die tragende Fläche ebenfalls zunimmt.

## Claims

1. An axial thrust bearing for a wet-running centrifugal pump with a first bearing ring (1) and with a second bearing ring of ceramic, with which the first bearing ring (1) in the running surface (2) directed to the second bearing ring comprises unevennesses (3, 4) which are designed such that bearing surfaces are formed in the region of raisings (3) and non-bearing surfaces are formed between these, **characterised in that** the first bearing ring (1) is formed of an injection moulding material or sinter material, based on carbon, and that the unevennesses (3, 4) in the running surface (2) have been formed by injection moulding, pressing or a thermal post-treatment of this bearing ring (1).

2. An axial thrust bearing according to claim 1, **characterised in that** the running surface (2) is formed without a material-removing machining.

3. An axial thrust bearing according to one of the preceding claims, **characterised in that** the unevennesses (3, 4) are designed in the form of a waved surface, which preferably have a height difference Δh of between 10 µm to 50 µm.

4. An axial thrust bearing according to one of the preceding claims, **characterised in that** three to six wave peaks (3) are arranged distributed over the surface (2).

5. An axial thrust bearing according to one of the preceding claims, **characterised in that** essentially radially arranged lubrication grooves which preferably lie in the region of the wave troughs (4), are provided in the running surface (2) directed to the second bearing ring.

6. An axial thrust bearing according to one of the preceding claims, **characterised in that** the wave peaks (3), during a running-in procedure of the bearing, flatten in a manner such that on operation, an as thin as possible lubricating film forms between the flattened wave peaks (3) and the oppositely lying bearing ring.

7. An axial thrust bearing according to one of the preceding claims, **characterised in that** the unevennesses (3, 4) in the running surface (2) of the first bearing ring (1) are designed such that with an increasing flattening of the raisings on running in the bearing, the bearing surface likewise increases.

## Revendications

1. Palier lisse axial pour une pompe centrifuge à fonctionnement humide comportant une première bague de palier (1) et une seconde bague de palier en céramique, dans lequel la première bague de palier (1) présente, dans la surface de portée (2) orientée vers la seconde bague de palier, des inégalités (3, 4) qui sont conçues de façon à former des surfaces portantes dans des zones d'élévations (3) et, entre elles, des surfaces non portantes **caractérisé en ce que** la première bague de palier (1) est formée d' une matière à base de carbone moulée par injection ou frittée, et **en ce que** les inégalités (3, 4) dans la surface de portée (2) ont été formées lors du moulage par injection, du pressage ou d'un traitement complémentaire thermique de cette bague de palier (1).

2. Palier lisse axial selon la revendication 1, **caractérisé en ce que** la surface de frottement (2) est formée sans usinage par enlèvement de matière.

3. Palier lisse axial selon l'une quelconque des revendications précédentes, **caractérisé en ce que** les inégalités (3, 4) sont conçues sous la forme d'une surface ondulée, qui présente de préférence une différence de hauteur Δh comprise entre 10 µm à 50 µm.

4. Palier lisse axial selon l'une quelconque des revendications précédentes, **caractérisé en ce que** trois à six sommets (3) sont disposés et répartis sur la surface (2).

5. Palier lisse axial selon l'une quelconque des revendications précédentes, **caractérisé en ce qu'**il est prévu, dans la surface de portée (2) orientée vers la seconde bague de palier, des rainures de lubrification disposées essentiellement dans le sens radial et situées de préférence dans la zone des creux (4) des ondulations.

6. Palier lisse axial selon l'une des revendications précédentes, **caractérisé en ce que** les sommets (3) sont aplatis dans un processus de rodage du palier de telle sorte que pendant le fonctionnement, un film lubrifiant aussi mince que possible se forme entre les sommets aplatis (3) et la bague de palier opposée.

7. Palier lisse axial selon l'une des revendications précédentes, **caractérisé en ce que** les inégalités (3, 4) sont ménagées dans la surface de portée (2) de la première bague de palier (1) de telle sorte que, lors du rodage du palier, la surface portante augmente également avec l'aplatissement croissant des élévations.
